# EUROPEAN PATENT APPLICATION

(11) **EP 4 821 827 A2**
(43) Date of publication of application: **14.10.2026**
(21) Application number: 26193168.7
(22) Date of filing: 06.12.2019
(51) Int. Cl.: B64D 35/025

(54) **ARCHITECTURES FOR HYBRID-ELECTRIC PROPULSION**

(30) Priority: 18.03.2019 US 201962820064 P
(62) Document number(s) of the earlier application(s) in accordance with Art. 76 EPC: 24210037.8 / 4 477 557; 19920049.4 / 3 941 830
(71) Applicant: Pratt & Whitney Canada Corp., Longueuil, Québec J4G 1A1 (CA)
(72) Inventor: LATULIPE, Eric, (01BE5) Longueuil, J4G 1A1 (CA); THOMASSIN, Jean, (01BE5) Longueuil, J4G 1A1 (CA); WANG, Xi, (01BE5) Longueuil, J4G 1A1 (CA); DUBREUIL, Jean, (01BE5) Longueuil, J4G 1A1 (CA); DIONNE, Luc, (01BE5) Longueuil, J4G 1A1 (CA); JULIEN, Andre, (01BE5) Longueuil, J4G 1A1 (CA)
(74) Representative: Dehns

(57) **Abstract**

A hybrid propulsion system includes a heat engine configured to drive a heat engine shaft. An electric motor is configured to drive an electric motor shaft. A transmission system includes at least one gearbox. The transmission system is configured to receive rotational input power from each of the heat engine shaft and the electric motor shaft and to convert the rotation input power to output power.

## Description

### BACKGROUND OF THE INVENTION

### 1. Field of the Invention

The present disclosure relates to aircraft engines, and more particularly to hybrid aircraft engines.

### 2. Description of Related Art

Aircraft engines vary in efficiency and function over a plurality of parameters, such as thrust requirements, air temperature, air speed, altitude, and the like. Aircraft require the most thrust at take-off, wherein the demand for engine power is the heaviest. However, during the remainder of the mission, the aircraft engines often do not require as much thrust as during take-off. The size and weight of the engines allows them to produce the power needed for take-off, however after take-off the engines are in effect over-sized for the relatively low power required to produce thrust for cruising in level flight.

The conventional techniques have been considered satisfactory for their intended purpose. However, there is an ever present need for improved aircraft engines. This disclosure provides a solution for this need.

### SUMMARY OF THE INVENTION

A hybrid propulsion system includes a heat engine configured to drive a heat engine shaft. An electric motor is configured to drive an electric motor shaft. A transmission system includes at least one gearbox. The transmission system is configured to receive rotational input power from each of the heat engine shaft and the electric motor shaft and to convert the rotation input power to output power.

The at least one gearbox can include a combining gearbox connecting to the heat engine shaft and to the electric motor shaft to combine rotational input power from the heat engine and electric motor for providing rotational output power to an output shaft. A turbine gearbox can be included, wherein the turbine gearbox is connected between the heat engine shaft and a shaft for driving a turbine and a compressor to drive the turbine and compressor at a different rotational speed from the heat engine.

The at least one gearbox can include a combining gearbox connecting to the heat engine shaft, the electric motor shaft, and a shaft for driving a turbine and compressor, to combine rotational input power from the heat engine and electric motor for providing rotational output power to an output shaft and to drive the turbine and compressor. The turbine and compressor can both be on one side of the combining gearbox. It is also contemplated that the turbine and compressor can be connected on opposite sides of the combining gearbox.

The heat engine shaft and the electric motor shaft can be connected for common rotation. The at least one gearbox can include a reduction gearbox connected to a common output shaft of the electric motor and the heat engine, and a turbine gearbox can be connected between the heat engine shaft and a shaft for driving a turbine and a compressor to drive the turbine and compressor at a different rotational speed from the heat engine and electric motor.

The heat engine shaft and electric motor shaft can be concentric with a shaft for rotation of the turbine and compressor, wherein the at least one gearbox includes a reduction gearbox connected to each of the heat engine shaft and the electric motor shaft and to the shaft for rotation of the turbine and compressor.

In another aspect, the heat engine shaft and the electric motor shaft can be connected for common rotation. The at least one gearbox can include a combining gearbox connecting to a common output shaft of the electric motor and the heat engine and a shaft for driving a turbine and compressor, to combine rotational input power from the heat engine and electric motor for providing rotational output power to an output shaft and to drive the turbine and compressor. The turbine and compressor can both be on one side of the combining gearbox. It is also contemplated that the turbine and compressor can be connected on opposite sides of the combining gearbox.

The at least one gearbox can include a combining gearbox connecting to the heat engine shaft and to the electric motor shaft to combine rotational input power from the heat engine and electric motor for providing rotational output power to an output shaft. A turbine driver motor can be connected to a shaft for driving a turbine and a compressor to drive the turbine and compressor at a different rotational speed ratio from the heat engine and electric motor.

In another aspect, the heat engine shaft and the electric motor shaft can be connected for common rotation. The at least one gearbox can include a reduction gearbox connected to a common output shaft of the electric motor and the heat engine. A turbine driver motor can be connected to a shaft for driving a turbine and a compressor to drive the turbine and compressor at a different rotational speed ratio from the heat engine and electric motor.

In another aspect, the heat engine shaft and the electric motor shaft can be connected for common rotation. The at least one gearbox can include a reduction gearbox connected to a common output shaft of the electric motor and the heat engine. A turbine gearbox can be connected through a clutch between the heat engine shaft and a shaft for driving a turbine and a compressor to drive the turbine and compressor at a different rotational speed from the heat engine and electric motor when the clutch is engaged. The shaft for driving the turbine and compressor can be connected to a turbine driver motor to drive the turbine and compressor independently from the heat engine and electric motor when the clutch is disengaged.

In another aspect, the heat engine shaft and electric motor shaft can be concentric with a shaft for rotation of a turbine and compressor. The at least one gearbox can include a reduction gearbox connected to each of the heat engine shaft and the electric motor shaft. A clutch in the shaft for rotation of the turbine and compressor can connect between the reduction gearbox a turbine driver motor connected to the shaft for rotation of the turbine and a compressor to drive the turbine and compressor with the reduction gearbox when the clutch is engaged, and to drive
the turbine and compressor independently from the heat engine and electric motor when the clutch is disengaged.

In another aspect, the heat engine shaft and the electric motor shaft can be connected for common rotation. The at least one gearbox can include a reduction gearbox connected to a common output shaft of the electric motor and the heat engine. A clutch can connect between the reduction gearbox and a turbine driver motor connected to a shaft for driving a turbine and a compressor to drive the turbine and compressor with rotational power from the heat engine and electric motor when the clutch is engaged, and to drive the turbine and compressor independently from the heat engine and electric motor when the clutch is disengaged.

In another aspect, the heat engine shaft and the electric motor shaft can be connected for common rotation. The at least one gearbox can include a combining gearbox connecting to a common output shaft of the electric motor and the heat engine, and a shaft of a turbine to combine rotational input power from the heat engine, electric motor, and turbine for providing rotational output power to an output shaft. A reduction gearbox can be connected to the output shaft, wherein a compressor is connected to be driven on the output shaft.

In another aspect, the heat engine shaft and the electric motor shaft can be connected for common rotation. The at least one gearbox can include a reduction gearbox connected to a common output shaft of the electric motor and the heat engine. A turbine gearbox can be connected between the heat engine shaft and a shaft of a turbine so the turbine can rotate at a different rotational speed from the heat engine and electric motor. A compressor can be connected to the reduction gearbox through a compressor shaft concentric with the common output shaft so the compressor can be driven at a different rotational speed from the common output shaft.

In another aspect, the heat engine shaft and the electric motor shaft can be connected for common rotation. The at least one gearbox can include a super position gearbox connecting to a common output shaft of the electric motor and the heat engine, and a shaft for driving a turbine and compressor to combine rotational input power from the heat engine and electric motor for providing rotational output power to an output shaft and to drive the turbine and compressor.
The super position gearbox can be configured so speed ratio between the common output shaft and the shaft for driving the turbine and compressor can vary.

A turbine can be connected to the heat engine to be driven by exhaust form the heat engine, and a generator can be connected to be driven by the turbine.

These and other features of the systems and methods of the subject disclosure will become more readily apparent to those skilled in the art from the following detailed description of the preferred embodiments taken in conjunction with the drawings.

### BRIEF DESCRIPTION OF THE DRAWINGS

So that those skilled in the art to which the subject disclosure appertains will readily understand how to make and use the devices and methods of the subject disclosure without undue experimentation, preferred embodiments thereof will be described in detail herein below with reference to certain figures, wherein:
Fig. 1 is a schematic view of an exemplary embodiment of a hybrid propulsion system constructed in accordance with the present disclosure, showing a first gearbox arrangement;
Fig. 2 is a schematic view of an exemplary embodiment of a hybrid propulsion system constructed in accordance with the present disclosure, showing a second gearbox arrangement;
Fig. 3 is a schematic view of an exemplary embodiment of a hybrid propulsion system constructed in accordance with the present disclosure, showing a third gearbox arrangement;
Fig. 4 is a schematic view of an exemplary embodiment of a hybrid propulsion system constructed in accordance with the present disclosure, showing a fourth gearbox arrangement;
Fig. 5 is a schematic view of an exemplary embodiment of a hybrid propulsion system constructed in accordance with the present disclosure, showing a fifth gearbox arrangement;
Fig. 6 is a schematic view of an exemplary embodiment of a hybrid propulsion system constructed in accordance with the present disclosure, showing a sixth gearbox arrangement;
Fig. 7 is a schematic view of an exemplary embodiment of a hybrid propulsion system constructed in accordance with the present disclosure, showing a seventh gearbox arrangement;
Fig. 8 is a schematic view of an exemplary embodiment of a hybrid propulsion system constructed in accordance with the present disclosure, showing an eighth gearbox arrangement;
Fig. 9 is a schematic view of an exemplary embodiment of a hybrid propulsion system constructed in accordance with the present disclosure, showing a ninth gearbox arrangement;
Fig. 10 is a schematic view of an exemplary embodiment of a hybrid propulsion system constructed in accordance with the present disclosure, showing a tenth gearbox arrangement;
Fig. 11 is a schematic view of an exemplary embodiment of a hybrid propulsion system constructed in accordance with the present disclosure, showing an eleventh gearbox arrangement;
Fig. 12 is a schematic view of an exemplary embodiment of a hybrid propulsion system constructed in accordance with the present disclosure, showing a twelfth gearbox arrangement;
Fig. 13 is a schematic view of an exemplary embodiment of a hybrid propulsion system constructed in accordance with the present disclosure, showing a thirteenth gearbox arrangement;
Fig. 14 is a schematic view of an exemplary embodiment of a hybrid propulsion system constructed in accordance with the present disclosure, showing a fourteenth gearbox arrangement; and
Fig. 15 is a schematic view of an exemplary embodiment of a hybrid propulsion system constructed in accordance with the present disclosure, showing a fifteenth gearbox arrangement.

### DETAILED DESCRIPTION OF THE PREFERRED EMBODIMENTS

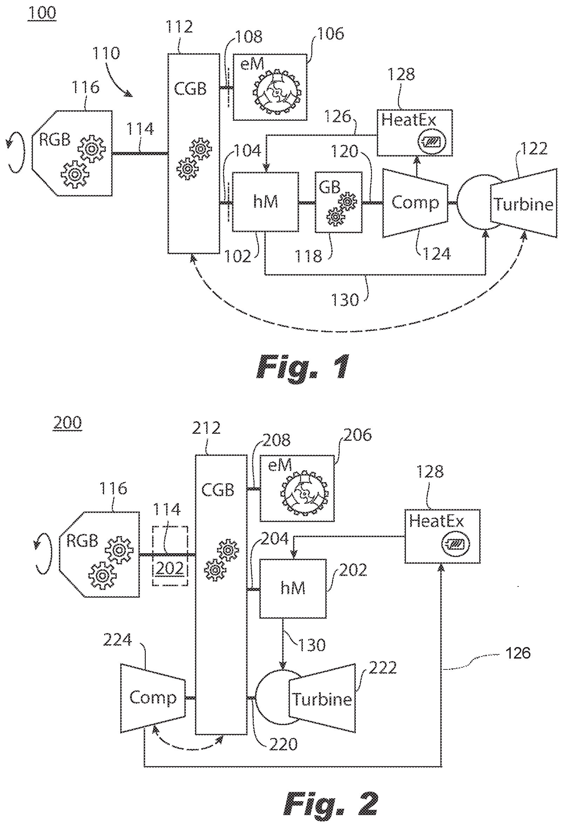

Reference will now be made to the drawings wherein like reference numerals identify similar structural features or aspects of the subject disclosure. For purposes of explanation and illustration, and not limitation, a partial view of an exemplary embodiment of a hybrid propulsion system in accordance with the disclosure is shown in Fig. 1 and is designated generally by reference character 100. Other embodiments of hybrid propulsion systems in accordance with the disclosure, or aspects thereof, are provided in Figs. 2-15, as will be described. The systems and methods described herein can be used to provide hybrid propulsion, e.g., for improving fuel efficiency in aircraft.

The hybrid propulsion system 100 includes a heat engine (or motor) 102 configured to drive a heat engine shaft 104. An electric motor 106 is configured to drive an electric motor shaft 108. A transmission system 110 includes at least one gearbox. The transmission system 110 is configured to receive rotational input power from each of the heat engine shaft 104 and the motor shaft 108 and to convert the rotation input power to output power, as indicated by the circular arrow in Fig. 1.

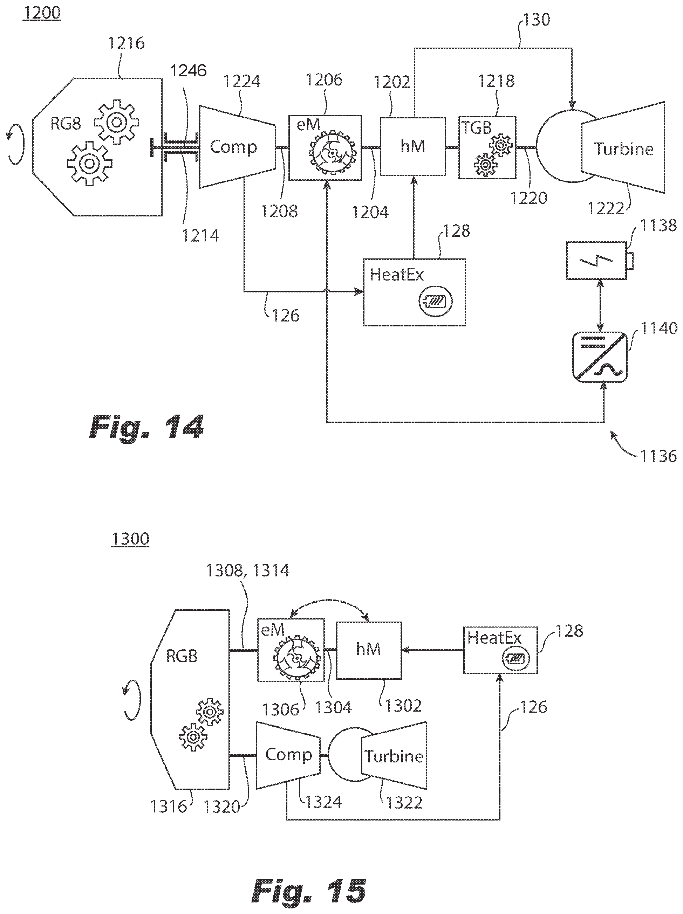

The at least one gearbox includes a combining gearbox 112 connecting to the heat engine shaft 104 and to the motor shaft 108 to combine rotational input power from the heat engine 102 and electric motor 106 for providing rotational output power to an output shaft 114, which can drive a reduction gearbox 116 for turning an aircraft propeller, fan, or any other suitable type of air mover for example. A turbine gearbox 118 is included, which is connected between the heat engine shaft 104 and a shaft 120 for driving a turbine 122 and a compressor 124 to drive the turbine 122 and compressor 124 at a different rotational speed from the heat engine 102. For example, through the turbine gearbox 118, the heat engine 102 can run at 8000 revolutions per minute (RPM), the heat engines exhaust can be recovered by the turbine 122 to drive the compressor 120 at 35,000 RPM. The turbine gearbox 118 can be a two speed transmission or constant velocity transmission (CVT) which can eliminate the need for a variable inlet guide vane (VIGV) controlling the compressor 124. It is also contemplated that the turbine 122 and compressor 124 can separately connect to the turbine gear box 118, e.g., using a concentric shaft for the compressor such as the shaft 1246 shown in Fig. 14, so that the turbine 122 and compressor 124 can rotate at different rotational speeds. These types of turbine gearbox can apply to each of the turbine gearboxes described below, even if not specifically repeated.

Those skilled in the art will readily appreciate that while described herein in the context of driving the turbine 122 and compressor 124, that the turbine 122 can actually add power to the shaft 120 and therefore cooperates with the heat engine 102 to drive the combining gearbox 112, however, in configurations herein where the turbine 122 and compressor 124 spin at a common speed the compressor 124 and turbine 122 are collectively referred to herein as driven.

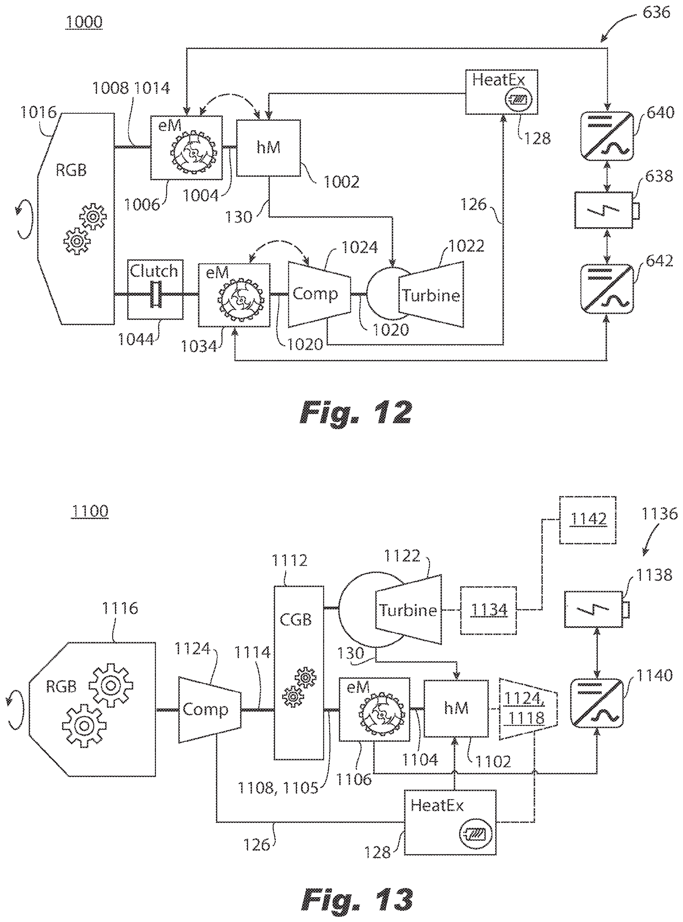

The compressor 120 compresses air and supplies the compressed air to the heat engine 102 through the air line 126, which includes heat exchanger 128 for cooling the compressed air. After combustion in the heat engine 102, the combustion products are supplied through a combustion products line 130 to the turbine 122, which extracts power from the compressed combustion products before exhausting them. The configurations shown in Figs. 2-15 also include similar air lines 126, heat exchangers 128, and combustion products lines 130, and the details for such are not repeated below for each Figure. Also, unless specified otherwise, the configurations in each of Figs. 2-15 include an output shaft 114 connecting between a combining gearbox (e.g. combining gearbox 112) and reduction gearbox 116, the details of which will not be repeated below for each Figure. The electric motor 106 can be powered to boost horse power, e.g., for take-off, in parallel with the heat motor 102, and can be powered down, e.g., for cruising in level flight, where only the heat motor 102 is needed for power. It is also contemplated that the electric motor 106 can be used as a generator to recharge the battery, e.g. source 1138 of Fig. 13, when power is available from the heat engine 102 or form wind milling the propeller to drive the reduction gear box 116. The compressor 124 and turbine 122 improve the thermal efficiency of the heat engine 102. Similar benefits are derived with the configurations described below with respect to Figs. 2-15. The dashed line in Fig. 1 schematically indicates that the turbine 122 can optionally be moved to connect directly to the combining gearbox 112, much as described below with respect to Fig. 13, which switch in turbine position can also be applied to other arrangements described below wherein the compressor and turbine are shown and described as being on a common shaft.

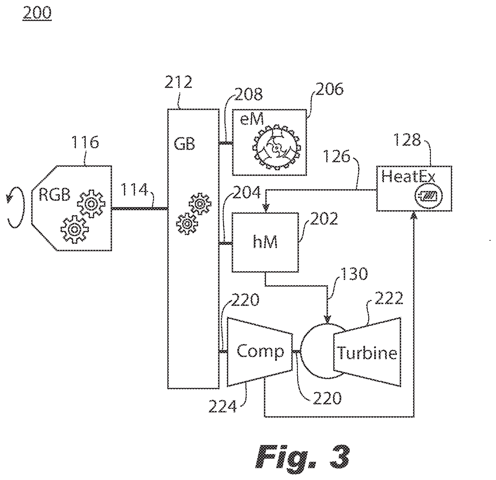

With reference now to Fig. 2, a system 200 includes a combining gearbox 212 connecting to the heat engine shaft 204, the motor shaft 208, and a shaft 220 for driving the turbine 222 and compressor 224. The combining gearbox 212 combines rotational input power from the heat engine (or motor) 202 and electric motor 206 for providing rotational output power to an output shaft 114 and to drive the turbine 222 and compressor 224. While connected on a common shaft 220, the turbine 222 and compressor 224 can be connected on opposite sides of the combining gearbox 212 as shown in Fig. 2. It is also contemplated that the turbine 222 and compressor 224 can both be connected on one side of the combining gearbox 212, as shown in Fig. 3. The portion of the combining gearbox 212 that drives the shaft 220 can be a two speed transmission or constant velocity transmission (CVT) which can eliminate the need for a variable inlet guide vane (VIGV) controlling the compressor 224. This applies to arrangements described below wherein the turbine and compressor connect directly to a combined gearbox, even if not specifically repeated.

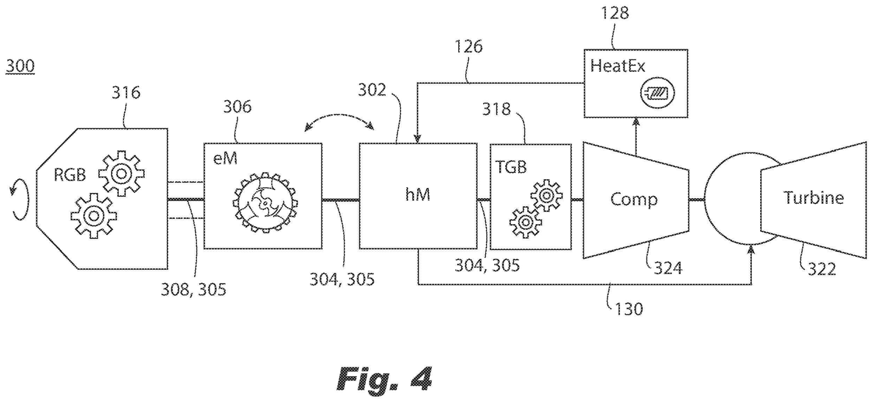

With reference now to Fig. 4, a system 300 is shown wherein the heat engine shaft 304 and the electric motor shaft 308 are connected for common rotation. A reduction gearbox 316, e.g. for ultimately outputting power to a propeller, is connected to a common output shaft 305 of the electric motor 306 and the heat engine 302. A turbine gearbox 332 is connected between the heat engine shaft 304 and a shaft 320 for rotation of the turbine 322 and compressor 324 at a different rotational speed from the heat engine 302 and electric motor 306. The broken line in Fig. 4 indicates that the position of the heat engine 302 and electric motor 306 can be reversed on the common shaft 305. If there is a requirement to guarantee power from one of the heat engine 302 or electric motor 306 in the event of stoppage of the other, each of the heat engine 302 and electric motor can be connected to the reduction gearbox 316 through a concentric shaft, e.g. as indicated by the broken lines between the electric motor 306 and the reduction gear box 316. The same applies to other configurations herein where the heat engine and electric motor are shown and described as having a common output shaft.

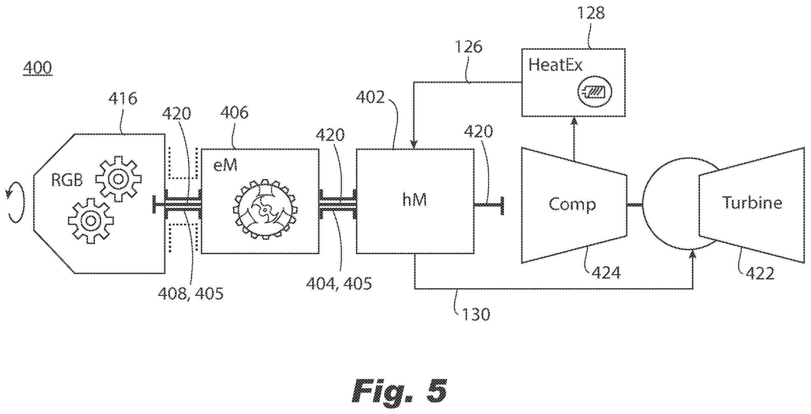

With reference now to Fig. 5, in the system 400, the heat engine shaft 404 and electric motor shaft 408 are concentric with a shaft 420 for rotation of the turbine 422 and compressor 424. The heat engine shaft 404 and electric motor shaft 408 can be a common shaft 405 as shown in Fig. 5, or can themselves be concentric with one another as indicated by the broken lines in Fig. 5. A reduction gearbox 416 is connected to each of the heat engine shaft 404 and the electric motor shaft 408, e.g., for driving a propeller with rotational input from the heat engine 402 and electric motor 406. The reduction gearbox 416 connects to a shaft 420 for rotation of the turbine 422 and compressor 424.

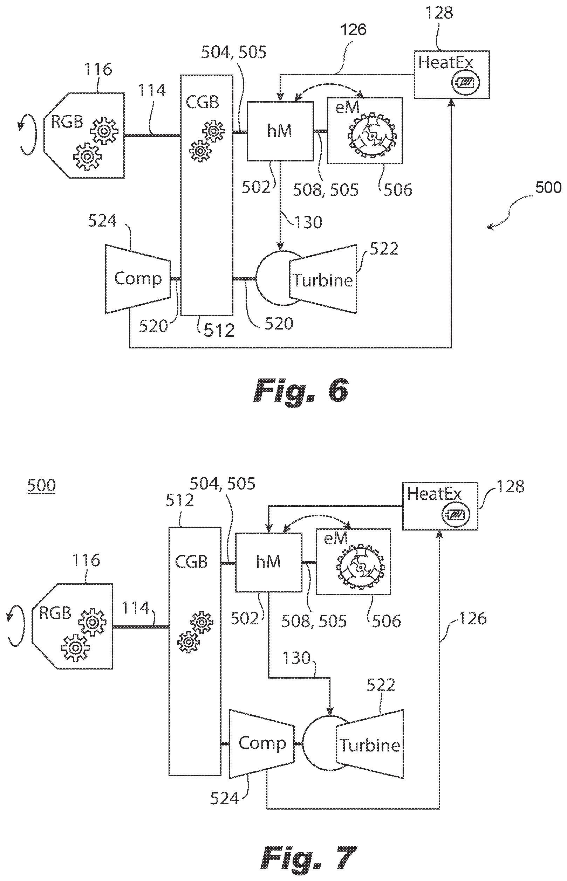

With reference now to Fig. 6, a system 500 has a heat engine shaft 504 and the electric motor shaft 508 connected for common rotation. A combining gearbox 512 connects to the common output shaft 505 of the electric motor 506 and the heat engine 502 and a shaft 520 for driving a turbine 522 and compressor 524, to combine rotational input power from the heat engine 502 and electric motor 506 for providing rotational output power to an output shaft 114 and to drive the turbine 522 and compressor 524. The turbine 522 and compressor 524 are connected on opposite sides of the combining gearbox 512. As shown in Fig. 7, it is also contemplated that the turbine 522 and compressor 524 can both be on one side of the combining gearbox 512. The broken lines in Figs. 6 and 7 schematically indicate that the positions of the heat motor 502 and electric motor 506 can be switched.

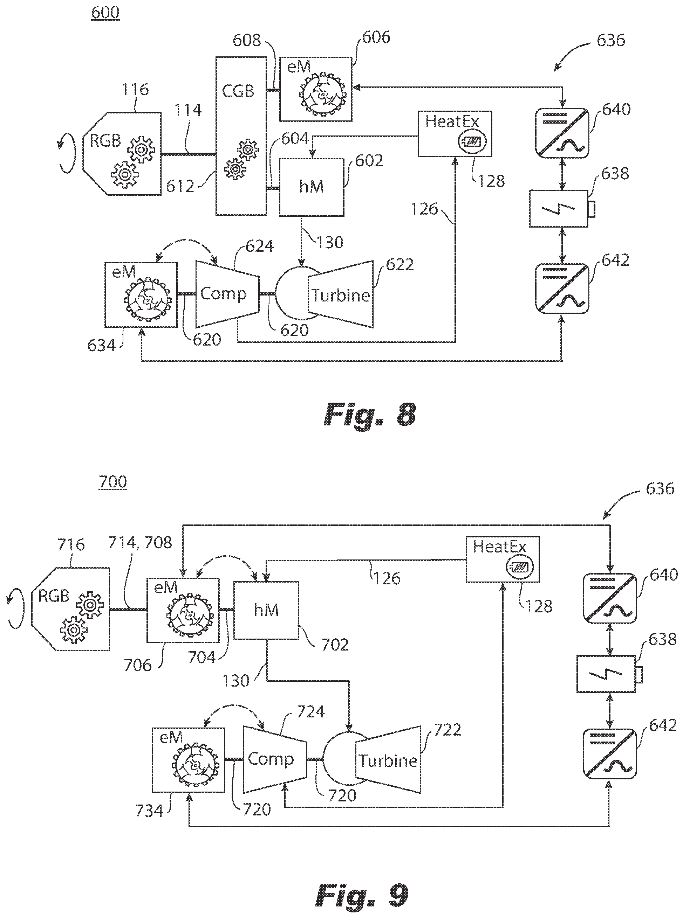

Referring now to Fig. 8, a system 600 includes a combining gearbox 612 connecting to the heat engine shaft 604 and to the electric motor shaft 608 to combine rotational input power from the heat engine 602 and electric motor 606 for providing rotational output power to an output shaft 114. A turbine driver motor/generator 634 is connected to a shaft 620 for driving a turbine 622 and a compressor 624 to drive the turbine 622 and compressor 624 at a different rotational speed ratio from the heat engine 602 and electric motor 606. The compressor 624 can therefore be a variable speed compressor. An electrical system 636 includes a storage 638, e.g., a battery, battery bank, capacitor, capacitor bank, super capacitor or super capacitor bank, flywheel or flywheel bank, or the like, is connected to a first inverter/rectifier component 640 for supplying power from the storage 638 to drive the electric motor 606 or in an energy recovery mode, to store into the storage 638 energy generated by driving the electric motor 606 in a generator mode. The electrical system 636 includes a second invert/rectifier component 642 for supplying power to drive the turbine driver motor 634, or to recover energy into the storage 638
from the turbine drive motor 634 if run in a generator mode. The broken line in Fig. 8 schematically indicates that the position of the motor 634 and compressor can be switched on the shaft 620. Figs. 9, 10, 11, and 12 each show similar electrical systems 636 and the description thereof is not repeated below.

With reference now to Fig. 9, a system 700 has the heat engine shaft 704 and the electric motor shaft 108 are connected for common rotation. A reduction gearbox 716 connected to a common output shaft 714 of the electric motor 706 and the heat engine 702. A turbine driver motor 734 is connected to a shaft 720 for driving a turbine 722 and a compressor 724 at a different rotational speed from the heat engine 702 and electric motor 706. The broken arrows in Fig. 9 schematically indicate that the position of the heat engine 702 and the electric motor 706 can be switched on the common shaft 714, and that the positions of the motor 734 and compressor 724 can be switched on the shaft 720.

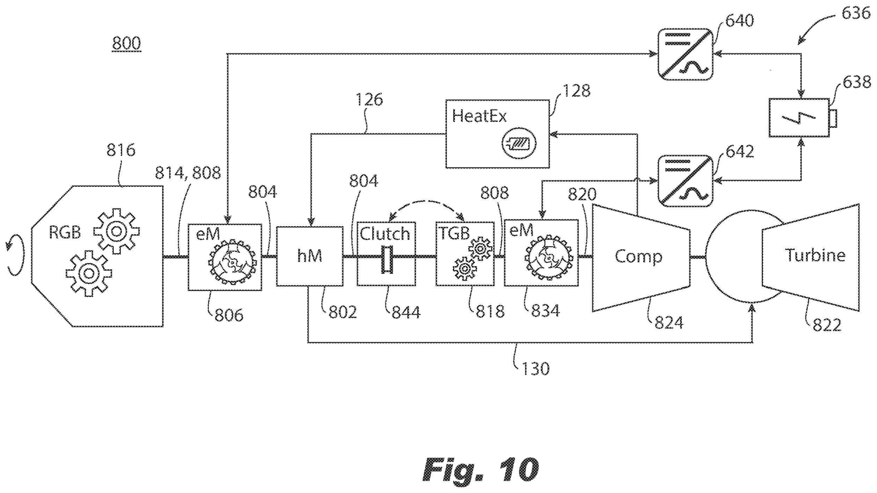

Referring now to Fig. 10, in the system 800 the heat engine shaft 804 and the electric motor shaft 808 are connected for common rotation. A reduction gearbox 816 is connected to a common output shaft 814 of the electric motor 806 and the heat engine 802. A turbine gearbox 818 is connected through a clutch 844 between the heat engine shaft 804 and a shaft 820 for driving a turbine 822 and a compressor 824 at a different rotational speed ratio from the heat engine 802 and electric motor 802 when the clutch 844 is engaged. The shaft 820 for driving the turbine 822 and compressor 824 is connected to a turbine driver motor 834 to drive the turbine 822 and compressor 824 independently from the heat engine 802 and electric motor 806 when the clutch 844 is disengaged. The broken lines in Fig. 10 schematically indicate that the positions of the clutch 844 and the turbine gearbox 818 can be switched. The clutch 844 can prevent electrical losses at steady state because the clutch engages when system 800 steady state operation, e.g., cruising in level flight, so the shaft 820 is connected to the heat engine 802 to avoid electrical conversion losses. In transients, the clutch 844 can open or disconnect to allow the motor 834 to drive the shaft 820 at a different speed ratio from the heat engine 802 as described above.

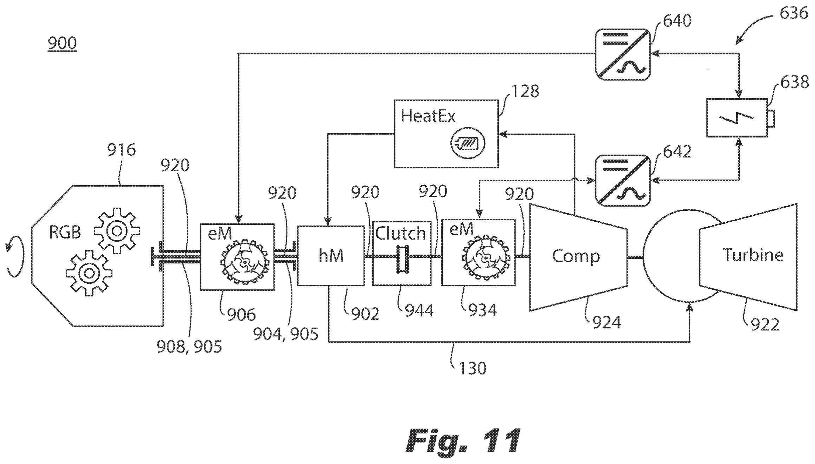

With respect to Fig. 11, a system 900 includes a heat engine shaft 904 and electric motor shaft 908 that are concentric with the shaft 20 for rotation of the turbine 922 and compressor 924 similar to the arrangement in Fig. 5. A reduction gearbox 916 is connected to each of the heat engine shaft 904 and the electric motor shaft 908, e.g., as a common shaft 905 or concentric with one another as described above with respect to Fig. 5. A clutch 944 in the shaft 920 connects between the heat engine 902 and a turbine driver motor 934 for rotating the turbine 922 and compressor 924 with the reduction gear box 916 when the clutch 944 is engaged, and to drive the turbine 922 and compressor 924 independently from the heat engine 902 and electric motor 906 when the clutch 944 is disengaged.

With reference now to Fig. 12, a system 1000 includes a heat engine shaft 1004 and electric motor shaft 1008 are connected for common rotation. A reduction gearbox 1016 is connected to a common output shaft 1014 of the electric motor 1006 and the heat engine 1002. The upper broken lines in Fig. 12 schematically indicate that the positions of the heat engine 1002 and the motor 1006 can be switched on the shaft 1014. A clutch 1044 connects between the reduction gearbox 1016 and a turbine driver motor 1034 connected to a shaft 1020 for driving a turbine 1022 and a compressor 1024 with rotational power from the heat engine 1002 and electric motor 1002 (through the reduction gearbox 1016) when the clutch 1044 is engaged, and to drive the turbine 1022 and compressor 1024 independently from the heat engine 1002 and electric motor 1006 when the clutch 1044 is disengaged. The lower broken line in Fig. 12 schematically indicates that the positions of the motor 1034 and the compressor 1024 can be switched on the shaft 1020.

Referring now to Fig. 13, a system 1100 is shown wherein the heat engine shaft 1104 and the electric motor shaft 1108 are connected for common rotation. A combining gearbox 1112 connects to a common output shaft 1105 of the electric motor 1106 and the heat engine 1102, and to a shaft 1114 of a turbine 1122 to combine rotational input power from the heat engine 1102, electric motor 1106, and turbine 1122 for providing rotational output power to an output shaft 1114. A reduction gearbox 1116 is connected to the output shaft 1114, wherein a compressor 1124 is connected to be driven on the output shaft 1114. An electrical system 1136 includes a storage 1138 connected through an inverter/rectifier component 1140 to supply power to the motor 1106, or to recover power from the motor 1106 in a generator mode to store in the storage 1138. The other arrangements described above that do not specifically show an electrical system can include a system similar to electrical system 1136, and Fig. 14 includes a similar system 1136 even though the details are not repeated. The compressor 1124 can also be connected to the reduction gearbox 1116 on its own shaft concentric with the shaft 1114, much as described below with respect to Fig. 14. The broken lines in Fig. 13 indicate that optionally the turbine 1122 can be mechanically decoupled from the CGB to drive a generator 1134, which can be connected through an inverter/rectifier component 1142 to charge the storage 1138, which can similarly be applied to other arrangements disclosed herein with the turbine decoupled from the compressor. As indicated by broken lines in Fig. 13, the compressor and a gear box 1118 can be connected to the heat engine 1102 in lieu of connecting the compressor 1124 on the output shaft 1114.

With reference now to Fig. 14, a system 1200 is shown wherein the heat engine shaft 1204 and the electric motor shaft 1208 are connected for common rotation. A reduction gearbox 1216 connected to a common output shaft 1214 of the electric motor 1206 and the heat engine 1202. A turbine gearbox 1218 is connected between the heat engine shaft 1204 and a shaft 1220
of a turbine 1222 so the turbine can rotate at a different rotational speed from the heat engine 1202 and electric motor 1206. A compressor 1224 is connected to the reduction gearbox 1216 through a compressor shaft 1246 concentric with the common output shaft 1214 so the compressor can be driven at a different speed from the common output shaft 1214.

Referring now to Fig. 15, a system 1300 includes a heat engine shaft 1304 and the electric motor shaft 1308 that are connected for common rotation. A super position gearbox 1316 connects to a common output shaft 1314 of the electric motor 1306 and the heat engine 1302, and to a shaft 1320 for driving a turbine 1322 and compressor 1324 to combine rotational input power from the heat engine 1302 and electric motor 1306 for providing rotational output power to an output shaft 1314 and to drive the turbine 1322 and compressor 1324. The super position gearbox 1316 is configured so the speed ratio between the common output shaft 1314 and the shaft 1320 for driving the turbine 1322 and compressor 1324 can vary, e.g., to adjust the speed of the compressor 1324 for altitude or for ground idle.

The turbine 1322 can optionally be decoupled from the compressor 1324 to drive a generator as described above with reference to Fig. 13. Similarly, the arrangement in Fig. 3 can be modified so the turbine 222 is decoupled from the compressor 224 to drive a generator. The heat engine, e.g., heat engine 202 in Fig. 2, can be split and connected on opposite sides of the respective gear box, e.g., the combined gearbox 212 in Fig. 2, as indicated in Fig. 2 with the broken line box 202. This split can be applied to other arrangements above besides the one in Fig. 2. Disconnect clutches or mechanism, e.g., clutch 844 in Fig. 10, can be included, e.g., in each of the shafts 104 and 108 as indicated in Fig. 1 by the broken lines crossing the shafts 104 and 108, for disconnecting the heat engine 102 or electric motor 106 as needed. This can also be applied to other embodiments disclosed above besides the arrangement in Fig. 1.

Even if modules are represented schematically herein vertically on top of each other, those skilled in the art having the benefit of this discourse will readily appreciate that they can be located side by side, one above the other or in any geometrical arrangement and in any order in physical implementations. Similarly, those skilled in the art having had the benefit of this disclosure will readily appreciate that modules represented on one side (right or left) of the respective gearbox herein can also potentially be installed on the other side or even trapped between a respecting reduction gearbox and combining gear box. Module disclosed herein can be installed directly on the respective combining gear box or reduction gear box with a proper speed ratio. Although modules are represented herein with an axial orientation, those skilled in the art having the benefit of this disclosure will readily appreciate that the use of bevel gears (or other mechanical or electrical devices) allows the installation of modules in any suitable orientation. Those skilled in the art having the benefit of this disclosure will readily appreciate that accessories not explicitly represented herein can be included and can potentially be connected mechanically to any module or driven electrically similar to the modules and components disclosed herein. Those skilled in the art having had the benefit of this disclosure will readily appreciate that combining gearboxes and reduction gearboxes disclosed above can be combined into a single respective gearbox. Finally, those skilled in the art having had the benefit of this disclosure considering the number of parts, will readily appreciate that each architecture disclosed herein can be recombined with other architectures disclosed herein to results in dozens of additional configurations, several examples of which are described above, and all of which are within the scope of this disclosure.

The methods and systems of the present disclosure, as described above and shown in the drawings, provide for propulsion systems with superior properties including use of hybrid heat engine and electric motor power. While the apparatus and methods of the subject disclosure have been shown and described with reference to preferred embodiments, those skilled in the art will readily appreciate that changes and/or modifications may be made thereto without departing from the scope of the subject disclosure.

The following numbered clauses define aspects and embodiments of the invention that are disclosed, but not presently claimed:
1. A hybrid propulsion system comprising:
   a heat engine configured to drive a heat engine shaft;
   an electric motor configured to drive an electric motor shaft; and
   a transmission system including at least one gearbox, wherein the transmission system is configured to receive rotational input power from each of the heat engine shaft and the electric motor shaft and to convert the rotation input power to output power.
2. The system as recited in clause 1, wherein the at least one gearbox includes:
   a combining gearbox connecting to the heat engine shaft and to the electric motor shaft to combine rotational input power from the heat engine and electric motor for providing rotational output power to an output shaft; and
   a turbine gearbox, wherein the turbine gearbox is connected between the heat engine shaft and a shaft for driving a turbine and a compressor to drive the turbine and compressor at a different rotational speed from the heat engine.
3. The system as recited in clause 1, wherein the at least one gearbox includes:
   a combining gearbox connecting to:
      the heat engine shaft;
      the electric motor shaft; and
      a shaft for driving a turbine and compressor,
   to combine rotational input power from the heat engine and electric motor for providing rotational output power to an output shaft and to drive the turbine and compressor.
4. The system as recited in clause 3, wherein one and only one of:
   the turbine and compressor are both on one side of the combining gearbox; or
   the turbine and compressor are connected on opposite sides of the combining gearbox.
5. The system as recited in clause 1, wherein the heat engine shaft and the electric motor shaft are connected for common rotation and wherein the at least one gearbox includes:
   a reduction gearbox connected to a common output shaft of the electric motor and the heat engine; and
   a turbine gearbox connected between the heat engine shaft and a shaft for driving a turbine and a compressor to drive the turbine and compressor at a different rotational speed from the heat engine and electric motor.
6. The system as recited in clause 1, wherein the heat engine shaft and electric motor shaft are concentric with a shaft for rotation of the turbine and compressor, wherein the at least one gearbox includes a reduction gearbox connected to each of the heat engine shaft and the electric motor shaft and to the shaft for rotation of the a turbine and compressor.
7. The system as recited in clause 1, wherein the heat engine shaft and the electric motor shaft are connected for common rotation, and wherein the at least one gearbox includes:
   a combining gearbox connecting to:
      a common output shaft of the electric motor and the heat engine; and
      a shaft for driving a turbine and compressor,
   to combine rotational input power from the heat engine and electric motor for providing rotational output power to an output shaft and to drive the turbine and compressor.
8. The system as recited in clause 7, wherein one and only one of:
   the turbine and compressor are both on one side of the combining gearbox; or
   the turbine and compressor are connected on opposite sides of the combining gearbox.
9. The system as recited in clause 1, wherein the at least one gearbox includes:
   a combining gearbox connecting to the heat engine shaft and to the electric motor shaft to combine rotational input power from the heat engine and electric motor for providing rotational output power to an output shaft; and
   further comprising a turbine driver motor connected to a shaft for driving a turbine and a compressor to drive the turbine and compressor at a different rotational speed ratio from the heat engine and electric motor.
10. The system as recited in clause 1, wherein the heat engine shaft and the electric motor shaft are connected for common rotation and wherein the at least one gearbox includes:
   a reduction gearbox connected to a common output shaft of the electric motor and the heat engine; and
   further comprising a turbine driver motor connected to a shaft for driving a turbine and a compressor to drive the turbine and compressor at a different rotational speed ratio from the heat engine and electric motor.
11. The system as recited in clause 1, wherein the heat engine shaft and the electric motor shaft are connected for common rotation and wherein the at least one gearbox includes:
   a reduction gearbox connected to a common output shaft of the electric motor and the heat engine; and
   a turbine gearbox connected through a clutch between the heat engine shaft and a shaft for driving a turbine and a compressor to drive the turbine and compressor at a different rotational speed from the heat engine and electric motor when the clutch is engaged, wherein the shaft for driving the turbine and compressor is connected to a turbine driver motor to drive the turbine and compressor independently from the heat engine and electric motor when the clutch is disengaged.
12. The system as recited in clause 1, wherein the heat engine shaft and electric motor shaft are concentric with a shaft for rotation of the turbine and compressor, wherein the at least one gearbox includes a reduction gearbox connected to each of the heat engine shaft and the electric motor shaft, and further comprising:
   a clutch in the shaft for rotation of the turbine and compressor connecting between the reduction gearbox and a turbine driver motor connected to the shaft for rotation of the turbine and compressor to rotate the turbine and compressor with the reduction gearbox when the clutch is engaged, and to drive the turbine and compressor independently from the heat engine and electric motor when the clutch is disengaged.
13. The system as recited in clause 1, wherein the heat engine shaft and the electric motor shaft are connected for common rotation and wherein the at least one gearbox includes:
   a reduction gearbox connected to a common output shaft of the electric motor and the heat engine; and
   further comprising a clutch connecting between the reduction gearbox and a turbine driver motor connected to a shaft for driving a turbine and a compressor to drive the turbine and compressor with rotational power from the heat engine and electric motor when the clutch is engaged, and to drive the turbine and compressor independently from the heat engine and electric motor when the clutch is disengaged.
14. The system as recited in clause 1, wherein the heat engine shaft and the electric motor shaft are connected for common rotation, and wherein the at least one gearbox includes:
   a combining gearbox connecting to:
      a common output shaft of the electric motor and the heat engine; and
      a shaft of a turbine,
   to combine rotational input power from the heat engine, electric motor, and turbine for providing rotational output power to an output shaft; and
   a reduction gearbox connected to the output shaft, wherein a compressor is connected to be driven on the output shaft.
15. The system as recited in clause 1, wherein the heat engine shaft and the electric motor shaft are connected for common rotation and wherein the at least one gearbox includes:
   a reduction gearbox connected to a common output shaft of the electric motor and the heat engine; and
   a turbine gearbox connected between the heat engine shaft and a shaft of a turbine so the turbine can rotate at a different rotational speed from the heat engine and electric motor, wherein a compressor is connected to the reduction gearbox through a compressor shaft concentric with the common output shaft so the compressor can be driven at a different rotational speed from the common output shaft.
16. The system as recited in clause 1, wherein the heat engine shaft and the electric motor shaft are connected for common rotation, and wherein the at least one gearbox includes:
   a super position gearbox connecting to:
      a common output shaft of the electric motor and the heat engine; and
      a shaft for driving a turbine and compressor,
   to combine rotational input power from the heat engine and electric motor for providing rotational output power to an output shaft and to drive the turbine and compressor, wherein the super position gearbox is configured so speed ratio between the common output shaft and the shaft for driving the turbine and compressor can vary.
17. The system as recited in clause 1, further comprising a turbine connected to the heat engine to be driven by exhaust form the heat engine, and a generator connected to be driven by the turbine.

## Claims

1. A hybrid propulsion system (1200) comprising:
a heat engine (602) configured to drive a heat engine shaft (604);
an electric motor (606) configured to drive an electric motor shaft (608); and
a transmission system including at least one gearbox (612), wherein the transmission system is configured to receive rotational input power from each of the heat engine shaft (604) and the electric motor shaft (608) and to convert the rotation input power to output power;
a turbine driver motor (634) connected to a shaft (620) for driving a turbine (622) and a compressor (624) to drive the turbine and compressor at a different rotational speed ratio from the heat engine (602) and electric motor (606); and
an electrical system (636) including:
a storage (638) connected to a first inverter/rectifier component (640) for supplying power from the storage (638) to drive the electric motor (606) or, in an energy recovery mode, to store into the storage (638) energy generated by driving the electric motor (606) in a generator mode; and
the electrical system (636) includes a second inverter/rectifier component (642) for supplying power to drive the turbine driver motor (634), or to recover energy into the storage (638) from the turbine driver motor (634) run in a generator mode.

2. The system as recited in claim 1, wherein the at least one gearbox includes a combining gearbox (612) connecting to the heat engine shaft (604) and to the electric motor shaft (608) to combine rotational input power from the heat engine (602) and electric motor (606) for providing rotational output power to an output shaft (114).

3. The system as recited in claim 1, wherein:
the heat engine shaft (704) and the electric motor shaft (708) are connected for common rotation; and
the at least one gearbox includes a reduction gearbox (716) connected to a common output shaft (714) of the electric motor (706) and the heat engine (702).

4. The system as recited in claim 1, wherein the heat engine shaft (804) and the electric motor shaft (808) are connected for common rotation and wherein the at least one gearbox includes:
a reduction gearbox (816) connected to a common output shaft (814) of the electric motor (806) and the heat engine (802); and
a turbine gearbox (818) connected through a clutch (844) between the heat engine shaft (804) and a shaft (820) for driving the turbine (822) and the compressor (824) to drive the turbine and compressor at a different rotational speed from the heat engine and electric motor when the clutch (844) is engaged, wherein the shaft (820) for driving the turbine and compressor is connected to the turbine driver motor (834) to drive the turbine and compressor independently from the heat engine and electric motor when the clutch (844) is disengaged.

5. The system as recited in claim 1, wherein the heat engine shaft and the electric motor shaft are concentric with a shaft for rotation of the turbine and compressor, wherein the at least one gearbox includes a reduction gearbox connected to each of the heat engine shaft and the electric motor shaft, and further comprising a clutch (944) in the shaft for rotation of the turbine and compressor connecting between the reduction gearbox and the turbine driver motor (934) connected to the shaft for rotation of the turbine and compressor, to rotate the turbine and compressor with the reduction gearbox when the clutch is engaged, and to drive the turbine and compressor independently from the heat engine and electric motor when the clutch is disengaged.

6. The system as recited in claim 1, wherein the heat engine shaft (1004) and the electric motor shaft (1008) are connected for common rotation and wherein the at least one gearbox includes a reduction gearbox (1016) connected to a common output shaft (1014) of the electric motor (1006) and the heat engine (1002), and further comprising a clutch (1044) connecting between the reduction gearbox (1016) and the turbine driver motor (1034) connected to a shaft (1020) for driving the turbine (1022) and the compressor (1024) to drive the turbine and compressor with rotational power from the heat engine and electric motor when the clutch is engaged, and to drive the turbine and compressor independently from the heat engine and electric motor when the clutch is disengaged.

7. The system as recited in any preceding claim, wherein the compressor (624) is a variable speed compressor.

8. The system as recited in any preceding claim, wherein the storage (638) comprises one of:
a battery;
a battery bank;
a capacitor;
a capacitor bank;
a super capacitor;
a super capacitor bank;
a flywheel; and
a flywheel bank.
